# EUROPÄISCHE PATENTSCHRIFT

(11) **EP 2 826 374 B1**
(45) Veröffentlichungstag und Bekanntmachung des Hinweises auf die Patenterteilung: **04.05.2016**
(21) Anmeldenummer: 14172550.7
(22) Anmeldetag: 09.02.2011
(51) Int. Cl.: A21C 9/08

(54) **Vorrichtung zum Formen von Teiglingen**
Device for forming dough pieces
Dispositif de formation de pâtons

(30) Priorität: 21.05.2010 DE 102010021149; 19.07.2010 DE 102010027622
(43) Veröffentlichungstag der Anmeldung: 21.01.2015
(62) Teilanmeldung aus: 11712748.0
(73) Patentinhaber: Fritsch GmbH, 97348 Markt Einersheim (DE)
(72) Erfinder: Bernhardt, Udo, 97346 Iphofen (DE); Wagner, Rainer, 97340 Martinsheim (DE)
(74) Vertreter: advotec.

(56) Entgegenhaltungen:
- EP-A1- 0 571 089
- EP-A1- 1 273 235
- EP-A2- 0 329 235
- EP-A2- 1 342 415
- DE-A1- 4 039 793
- US-A- 4 582 472

## Beschreibung

Die Erfindung betrifft eine Vorrichtung und ein Verfahren zum Formen von Teiglingen ausgehend von einer geradlinigen in eine bogen- bzw. ringförmige Gestalt.

Aus dem Stand der Technik sind verschiedene Vorrichtungen und Verfahren bekannt, wie Teiglinge in eine gebogene bzw. ringförmige Gestalt gebracht werden können. Zu diesem Zweck werden die vorbereiteten geradlinigen Teiglinge einer entsprechenden Vorrichtung zugeführt. Bei den Teiglingen handelt es sich insbesondere um aus dreieckigen Teigflächen gewickelte Croissant-Teiglinge. Mittels der Vorrichtung werden die Teiglinge in eine, insbesondere für Croissants bekannte, U-förmige Gestalt gebogen. Anschließend werden die derart geformten Teiglinge den Folgeprozessen zugeführt und fertig gebacken.

Die Druckschrift DE 40 39 793 A1 offenbart eine Croissant-Biegevorrichtung. Bei der Vorrichtung sind die Haltebacke sowie die Formbacken an getrennten Funktionselementen angeordnet. Beim Bewegungsablauf zur Formung des Croissants ist vorgesehen, dass ein Dorn als mittig angeordnetes Halteelement Verwendung findet. Durch gegenläufiges Schwenken der Biegearme, wobei ein Biegearm zugleich in der Höhe angehoben wird, wird der Croissant geformt.

In der US 4,582,472 A wird ebenso eine Croissant-Biegemaschine offenbart, bei welcher oberhalb eines Förderbands eine Greif- und Biegeanordnung vorhanden ist, mittels der der auf dem Förderband bewegte Croissant-Rohling erfasst und gebogen werden kann. Es ist eine Haltebacke sowie zwei Formbacken an Schwenkkörpern vorhanden.

In der Veröffentlichung EP 0 571 089 A1 wird eine Croissant-Biegevorrichtung offenbart, bei welcher mittels zweier schwenkbar angeordneter Hebel ein Croissant-Rohling um ein Halteelement gebogen wird. Es erfolgt ein Biegen des Croissants um die Haltebacke mittels der schwenkbar angeordneten weiteren seitlich angeordneten Elemente.

Die Druckschrift EP 1 342 415 A2 beschreibt eine Greifereinheit mit Halte- und Schwenkbacken. Die Greifereinheit befindet sich oberhalb eines Förderbands und kann sowohl senkrecht zum Förderband (in der Höhe) verfahren werden als auch in Transportrichtung mit dem Förderband. In Transportrichtung vor dem Croissant-Rohling kommt eine Haltebacke zur Anlage, wobei auf der gegenüberliegenden Seite des Croissant-Rohlings die Formbacken zur Anlage gebracht werden. Durch eine Schwenkbewegung der Formbacken erfolgt das Biegen des Croissants.

Zur kontinuierlichen Massenherstellung werden insbesondere Förderbänder eingesetzt, auf denen die Teiglinge bewegt werden.

In einer Ausführungsart ist aus dem Stand der Technik bekannt, dieses Förderband zugleich zur Formgebung der Teiglinge einzusetzen. Zu diesem Zweck wird das Förderband ausgehend von einer ebenen Gestalt zu einem weitgehend geschlossenen Rohr geformt und am Ende des entsprechenden Förderbands wiederum in die ebene Gestalt zurückgeformt. Durch den Mitlauf des Teiglings mit dem Förderband erfährt dieses insofern zugleich die ringförmige Formgebung durch das Förderband.

Problematisch bei diesem Stand der Technik ist es, dass der Teigling im Verfahren des Förderbands hierin nicht seitlich verkippen oder verrutschen darf. Dies ist jedoch wiederum schwerlich über einen laufenden Fertigungsprozess sicherzustellen. Insofern kommt es wiederholt zu Ausschüssen bzw. Fehlbildungen des Teiglings, welcher somit im Folgenden verworfen werden muss.

Zur Vermeidung dieser Problematik ist weiterhin aus dem Stand der Technik ein System bekannt, bei dem senkrecht zum waagrecht angeordneten Förderband zwei seitliche laufende Förderbänder vorhanden sind, welche einen Einzug der seitlichen Teiglingsenden bewirken. Ebenso ist bekannt, schräg angestellte Bürsten einzusetzen, welche vor den waagerecht angeordneten Förderbändern eine anfängliche bogenförmige Formgebung des Teiglings erzeugen. Ein Beispiel für diese Ausführungsart zeigt die Schrift DE 100 34 177 B4. Damit der Teigling durch die seitlichen senkrecht stehenden Förderbänder nicht aus der Lage verschoben wird, kann mittig der Teigling mittels eines Halteelements fixiert werden. Insofern führen die seitlichen Förderbänder zu einer Verbiegung des Teiglings um das mittige Halteelement. Insofern ist es mittels eines einfachen und schnellen Prozesses möglich, Teiglinge in eine U-förmige Gestalt zu bringen.

Erschwerend bei der Anwendung dieses Verfahrens ist es jedoch, dass der Teigling genau mittig auf das Förderband abgelegt werden muss. Denn nur somit wird sichergestellt, dass die beiden seitlich angeordneten Förderbänder den Teigling symmetrisch verbiegen. Sofern jedoch die vorherige Prozessstufe den Teigling nicht zielsicher auf das Förderband ablegen kann, ist es erforderlich, diesen zuvor mittels einer weiteren Einrichtung in die Mitte zu verbringen.

Weiterhin nachteilig an der vorgenannten Lösung ist es, dass es hiermit nicht möglich ist, eine ringförmige Gestalt zu erzeugen. Dies ist jedoch insbesondere aufgrund des Wunsches nach einer Variation der verschiedenen Teigformen dringend geboten.

Aufgabe der vorliegenden Erfindung ist es daher, eine Vorrichtung zum Formen von Teiglingen vorzustellen, bei der in einfacher Weise aus der geraden Gestalt des Teiglings eine U-förmige und/oder ringförmige Gestalt geformt werden kann.

Die Aufgabe wird durch eine erfindungsgemäße Lösung gemäß Anspruch 1 gelöst. Ein erfindungsgemäßes Verfahren zur Herstellung entsprechender U-förmiger oder ringförmiger Teiglinge ist im Verfahrenshauptanspruch angegeben.

Vorteilhafte Ausführungsformen der Erfindung sind Gegenstand der Unteransprüche.

Die gattungsgemäße Vorrichtung dient zum Formen von im Wesentlichen geradlinigen, insbesondere gewickelten, Croissant-Teiglingen in eine U-förmige oder ringförmige Gestalt. Die Ausführung eines geradlinigen Teiglings bedingt nicht zwingend eine exakt lineare Mittelachse des Teiglings. Vielmehr handelt es sich um einen länglichen Teigling, welcher vorwiegend gerade geformt ist. Einsatzzweck entsprechender Vorrichtung ist insbesondere die Herstellung von gewickelten Croissant-Teiglingen. Diese werden in bekannter Weise zunächst von einem aus einem Dreieck aufgewickelten Teigling gebildet. Die bevorzugte Ausführungsform von Croissants ist wiederum U-förmig bzw. ringförmig.

Weiterhin weist die Vorrichtung einen Greiferträger auf, an dem zumindest eine feste oder bewegliche Haltebacke angebracht ist. Diese Haltebacke kann an einer ersten Seite am Teigling zur Anlage gebracht werden. Die erste Seite bezieht sich hierbei auf eine Betrachtung von oben auf den Teigling, wobei die erste Seite eine Seite der Längserstreckung des Teiglings ist. Weiterhin sind am Greiferträger zwei jeweils um eine Schwenkachse schwenkbar im Greiferträger gelagerte Schwenkträger angebracht. Diese Schwenkträger vollziehen eine gegenläufige Schwenkbewegung. Die gegenläufige Schwenkbewegung wird realisiert aufgrund einer weitgehend parallelen Schwenkachse. Jedoch ist ebenso ein geringer Winkel zwischen den Schwenkachsen unerheblich hinsichtlich der erfindungsgemäßen Ausführung. Entsprechend der Relativbewegung der Schwenkträger gegenüber dem Greiferträger ist folglich eine Lagerung zwischen Schwenkträger und Greiferträger vorhanden. Am jeweiligen Schwenkträger ist wiederum eine Formbacke angebracht. Diese Formbacken der beiden Schwenkträger können nun wiederum auf der gegenüberliegenden zweiten Seite am Teigling zur Anlage gebracht werden. Hierbei ist es zunächst unerheblich, ob in Betrachtung hinsichtlich der Mittelachse des Teiglings die Haltebacke und Formbacke genau gegenüberliegend sind oder versetzt zueinander bzw. im Winkel zueinander ausgerichtet sind. Maßgeblich ist, dass sich Haltebacke und Formbacke auf gegenüberliegenden Seiten anliegen und der Teigling zwischen Haltebacke und Formbacken eingespannt werden kann.

Während hingegen bei bekannten Ausführungsformen lediglich je Schwenkträger eine feststehende Formbacke eingesetzt wird, ist erfindungsgemäß nunmehr vorgesehen, an jedem Schwenkträger die Haltebacke fest und ergänzend die Formbacke beweglich anzubringen. Insofern sind am Greiferträger zwei Haltebacken an den Schwenkträgern vorgesehen. Aufgrund der Anbindung der Haltebacken an den Schwenkträgern werden diese folglich mit dem Schwenkträger entsprechend gegenläufig bewegt.

Bei der Verwendung einer Haltebacke an jedem Schwenkträger wird es insbesondere ermöglicht, die Formbacke im Wesentlichen gegenüber der Haltebacke anzuordnen. Insofern wird eine sichere Einspannung des Teiglings zwischen der jeweiligen Formbacke und zugeordneten Haltebacke ermöglicht. Weiterhin wird es durch diese Ausführungsform ermöglicht, einen gewissen Zug auf den Teigling auszuüben und diesen somit geringfügig in die Länge ziehen zu können.

Die erfindungsgemäße Lösung sieht vor, dass mittels der Schwenkbewegung der am Schwenkträger angebrachten Formbacken unter Einspannung zwischen Haltebacke und Formbacken die Formgebung des Teiglings ermöglicht wird. Insofern wurde durch die Vorrichtung eine Möglichkeit geschaffen, entgegen dem Stand der Technik Teiglinge unabhängig von deren Lage mittels Haltebacke und Formbacken in eine U-förmige bzw. ringförmige Gestalt zu formen. Somit bedarf es hinsichtlich des Förderbands keiner weiteren Maßnahmen, wie seitlicher Förderbänder oder Förderbandführungen zur Erzeugung einer U-förmigen Gestalt. Weitere Vorteile gegenüber dem vorbekannten Stand der Technik ergeben sich im Hinblick auf die Hygiene, da die erfindungsgemäße Vorrichtung nur geringe Verschmutzungen, beispielsweise Teiganhaftungen, annimmt und zudem sehr leicht gereinigt werden kann. Außerdem kann die Greifeinrichtung bei Bedarf, beispielsweise bei Zuführung eines falsch gerollten Teiglings, einfach und bedarfsgerecht außer Eingriff gebracht beziehungsweise aus der Wirkzone entfernt werden, um dadurch Verschmutzungen von vorneherein zu vermeiden.

Weiterhin vorteilhaft ist die erfindungsgemäße Vorrichtung im Hinblick auf deren erforderlichen Bauraum in einer Produktionslinie. Denn die sehr kompakte Bauweise der Greifeinrichtung ermöglicht eine platzsparende Integration der gewünschten Funktionalität des Positionierens und/oder Biegens der Teiglinge in eine Produktionslinie.

Besonders vorteilhaft ist hierbei die Verwendung eines Schwenkantriebs an der Greifereinheit sowie der Einsatz eines Schwenkgetriebes. Insofern wird die Schwenkbewegung der Schwenkträger durch den Schwenkantrieb ausgelöst. Die Verbindung der beiden gegenläufig beweglichen Schwenkträger erfolgt mittels des Schwenkgetriebes.

Durch den Einsatz eines Schwenkantriebs mit der Verbindung der beiden Schwenkträger mittels des Schwenkgetriebes ist es in einfacher Weise möglich, die gekoppelte Bewegung der gegenläufigen Schwenkträger zu realisieren. Weiterhin wird durch diese Lösung sichergestellt, dass eine symmetrische Formgebung des Teiglings erfolgt. Hierbei ist es möglich, als Schwenkantrieb sowohl einen Servoantrieb einzusetzen, als auch mittels eines Linearantriebs, z.B. Pneumatikzylinder, über ein Kurbelgestänge die entsprechende Schwenkbewegung zu realisieren.

Vorteilhafterweise umfasst die Greifereinheit des Weiteren eine Hubvorrichtung. Hierbei werden mittels der Hubvorrichtung ein Schwenkträger und/oder eine Formbacke relativ zum Greifer und/oder Schwenkträger in Richtung der Schwenkachse angehoben. Die Forderung nach einer möglichen ringförmigen Gestalt führt zu der Problematik der kollidierenden Enden des Teiglings beim Formgebungsprozess. Um dies zu vermeiden ist es vorteilhaft, wenn ein Ende des Teiglings gegenüber dem anderen Ende angehoben werden kann. Insofern ist es besonders vorteilhaft, wenn bei der Greifereinheit eine Formbacke relativ zum Greiferträger angehoben werden kann. Hierbei ist es zum einen möglich, lediglich die Formbacke relativ zum Schwenkträger anzuheben oder den Schwenkträger samt Formbacke relativ zum Greiferträger zu bewegen.

Besonders vorteilhaft ist zur Realisierung der Hubvorrichtung die Kopplung der Schwenkbewegung an die Hubbewegung. Zu diesem Zweck ist es möglich, eine Kulissenführung einzusetzen. Diese wird zwischen dem Greiferträger und dem zweiten Schwenkträger angeordnet. Infolge der Schwenkbewegung des zweiten Schwenkträgers wird mittels der Kulissenführung zugleich die Hubbewegung ausgelöst. Es ist somit sichergestellt, dass bei der Schwenkbewegung in jedem Fall die zugehörige passende Hubbewegung durchgeführt wird. Für die Realisierung einer Kulissenführung stehen dem Fachmann verschiedene Möglichkeiten offen. Hierbei ist es zum einen möglich, die Welle, an welcher der Schwenkträger befestigt ist, mit einer ringförmigen ansteigenden Nut zu versehen und in diese Nut einen entsprechenden Nutbolzen in fester Verbindung mit dem Greiferträger eingreifen zu lassen. Gleichfalls ist es möglich, die Welle mit dem Schwenkträger mittels einer Federkraft in eine erste Richtung zu ziehen bzw. zu drücken und hierbei eine ringförmige ansteigende Fläche in fester Verbindung mit der Welle oder dem Greiferträger vorzusehen, auf welcher ein Gegenlager in fester Verbindung mit dem Greiferträger oder der Welle abgestützt wird. Bei Drehung der Welle mit dem Schwenkträger relativ zum Greiferträger wird über die ansteigende Fläche die entsprechende axiale Bewegung ausgelöst.

Als problematisch wurde aus den Prozessen erkannt, dass die ringförmige Gestalt nach Beendigung der Formgebung ohne weiteres Zutun nicht in jedem Fall sichergestellt werden kann. Daher ist es vorteilhaft, wenn in der Mittelebene der Greifereinheit ein Pressstempel angeordnet ist, der mittels eines Stempelantriebs im Wesentlichen parallel zu den Schwenkachsen bewegt werden kann. Hierbei führt die Bewegung des Pressstempels zu einer Verpressung der übereinanderliegenden Teiglingenden. Insofern ist der Pressstempel an derjenigen Position am Greiferträger anzubringen, bei der die Enden der Teiglinge in ringförmiger Gestalt übereinander liegen. Mittels der Verpressung der Teiglingenden wird sichergestellt, dass nach Lösen des Teiglings vom Greifer dieser nicht die ringförmige Gestalt verlässt. Hierdurch wird erreicht, dass der Teigling auch nach dem Backvorgang weitgehend seine ringförmige Gestalt, wie gewünscht, beibehält.

In Fortführung dieser Ausführung wird die Bewegung des Pressstempels derart mit der Bewegung der Formbacken gekoppelt, dass beim beginnenden Pressvorgang die Formbacken in eine Rückwärtsbewegung, d.h. Lösen der Einspannung des Teiglings, versetzt werden. Durch diesen Vorgang wird sichergestellt, dass beim Pressen der Enden der Teiglinge das nach außen drängende Teigmaterial nicht zu einer unerwünschten Verformung des Teiglings führt. Da bereits beim beginnenden Pressvorgang die Lage sichergestellt ist und die Formbacken nicht mehr zum Halten des Teiglings von Nöten sind, können diese folglich vorteilhaft beim Pressvorgang vom Teigling abgehoben werden.

Vorteilhafterweise wird die Greifereinheit derart ausgeführt, dass die Formbacken relativ zur Haltebacke bewegt werden können. Somit wird es ermöglicht, ein Einklemmen des Teiglings zu realisieren, ohne dass hierbei der Teigling unzulässig verquetscht wird. Die Anlagebewegung der Formbacke erfolgt hierbei vorzugsweise senkrecht zur Mittelachse des Teiglings. Zu diesem Zweck ist es zum einen möglich, die Formbacke drehbar am Schwenkträger zu lagern. Daher wird die Drehachse dieses Lagers zwischen Formbacke und Schwenkträger vorzugsweise im Wesentlichen parallel zur Mittelachse des Teiglings ausgerichtet. Alternativ ist es möglich, die Formbacke längsverschiebbar am Schwenkträger zu lagern. Insofern ist es vorteilhaft, die Schubachse im Wesentlichen senkrecht zur Mittelachse des Teiglings und senkrecht zur Schwenkachse auszurichten.

Zur Ausführung der Greifereinheit hinsichtlich des Einspannens des Teiglings eröffnen sich verschiedene Möglichkeiten. Hierbei ist es in einer Ausführungsform möglich, eine Haltebacke symmetrisch in der Mittelebene der Greifereinheit anzubringen. Die Haltebacke kann hierbei fest mit dem Greiferträger verbunden sein oder alternativ in einer Achse parallel zu den Schwenkachsen in der Höhe verstellbar angeordnet sein. Zur Formgebung umkreisen die Formbacken mit der Schwenkbewegung die Haltebacke. Durch die Verwendung einer einzelnen mittigen Haltebacke wird ein besonders einfacher Aufbau der Greifereinheit realisiert.

Bei Betrachtung der vorteilhaften Hubbewegung eines Schwenkträgers führt insbesondere die Anordnung von Haltebacke gegenüber der Formbacke zur sicheren Mitführung des eingespannten Endes des Teiglings in der Hubbewegung.

Die Formgebung von Formbacke und Haltebacke ist zunächst sekundär. Diese können im Querschnitt sowohl rund, abgerundet als auch eckig ausgeführt sein. Insbesondere für die feststehende Haltebacke ist es jedoch vorteilhaft, wenn die Kontaktfläche, an der der Teigling zur Anlage kommt, eine im Querschnitt kreisrunde oder konvexe Form aufweist. In Richtung seiner Längsachse kann die feststehende Haltebacke bevorzugt eine zylindrische oder eine sich zumindest abschnittsweise verjüngende, insbesondere kegelförmige, Formgebung aufweisen. Aufgrund der Verjüngung der feststehenden Haltebacke wird ein Anhaften des Teiglings beim Lösen der Haltebacke durch Zurückziehen der Greifereinheit verhindert.

Zur Sicherstellung der Formgebung des Teiglings und Mitnahme der entsprechenden eingespannten Enden des Teiglings und zugleich der Vermeidung von Anhaftungen an der Haltebacke und/oder Formbacke ist es von Vorteil, wenn die Kontaktfläche der Formbacke und/oder Haltebacke, an der der Teigling zur Anlage kommt, eine glatte Oberfläche aufweist.

Besonders vorteilhaft hat es sich gezeigt, die Haltebacke im Umfang zum Ende hin konisch zulaufen zu lassen. Dies ist insbesondere von Vorteil, wenn die Haltebacke vom Teigling entfernt wird. Insofern führt die konische Form bei einer senkrechten Herausziehbewegung der Haltebacke relativ zum Teigling zu einem leichten Ablösen des Teiglings ohne Anhaftungen an der Haltebacke. Insofern findet keine Schabbewegung bzw. Verformung des Teiglings in ungewollter Art bei einer senkrechten Herausziehbewegung der Greifereinheit statt. Es ist naheliegend, dass es zur Erzielung dieses vorteilhaften Effektes es nur der Schrägstellung der zur Anlage am Teigling kommenden Seite der Haltebacke bedarf und somit die seitlichen oder rückwärtigen Flächen bzw. der Umfangsbereich der Haltebacke beliebig geformt sein kann.

Die Anwendung der erfindungsgemäßen Vorrichtung erfordert zumindest die relative Positionierung der Greifereinheit zum jeweils zu formenden Teigling. Dies kann zum einen über die exakte Positionierung des Teiglings und Anhebung desselben zum Teigling erfolgen. Vorteilhaft ist jedoch die Anwendung einer Verfahreinheit an der Vorrichtung, wobei mittels der Verfahreinheit die Greifereinheit zumindest in einer Transportrichtung eines Transportbands und in einer zum Transportband senkrechten Achse bewegt werden kann.

Durch die Verwendung einer Verfahreinheit wird es insbesondere ermöglicht, die Teiglinge auf einem laufenden Transportband mittels der Greifereinheit zu formen. Hierbei kann jeweils die Greifereinheit zum jeweiligen Teigling abgesenkt und der Teigling im mitlaufenden Transport geformt werden. Insofern bedarf es zur Formgebung des Teiglings im Prozess zusätzlich zur Vorrichtung lediglich des Transportbands.

Besonders vorteilhaft ist die Verwendung einer Verfahreinheit, welche weiterhin in Richtung quer zum Transportband bewegt und hierbei, insbesondere zum Greifen, um eine senkrechte Achse geschwenkt werden kann. Durch diese Ausführung wird es insbesondere ermöglicht, den Teigling in eine beliebige Lage auf das Transportband aufzunehmen und/oder abzulegen und hierbei den Greifer entsprechend über den jeweiligen Teigling zu positionieren. Insofern wird die bekannte Problematik aus dem Stand der Technik überwunden, den geradlinigen Teigling exakt auf das Transportband ablegen zu müssen.

Die Ausführung der Verfahreinheit ist hierbei beliebig. Dem Fachmann stehen zu diesem Zweck verschiedene bekannte Lösungen zur Verfügung. Dies kann zum einen ein Mehrachsenroboter sein, als auch ein in zwei Achsen verschiebbares Portal mit ergänzender Schwenk- und Hubeinrichtung. Ebenso sind weitere Lösungen offensichtlich und nicht maßgeblich für die vorliegende Erfindung.

Weiterhin ist es besonders Vorteilhaft, wenn die Greifereinheit mit einer Werkzeugwechseleinrichtung auswechselbar an der Verfahreinheit befestigt werden kann. Dadurch hat der Betreiber die Möglichkeit, eine Produktionslinie durch einfaches Wechseln zwischen verschiedenen Greifereinheiten jeweils in einfacher Weise auf unterschiedliche Teiglingstypen, insbesondere auf Teiglinge unterschiedlicher Größe bzw. unterschiedlicher Form, anzupassen. Außerdem kann durch das Abnehmen der Greifereinheit eine einfache und gründliche Reinigung beziehungsweise Instandsetzung der Komponenten der Greifereinheit ermöglicht werden, insbesondere auch ohne dass die Produktionslinie stillgelegt wird.

Gemäß einer bevorzugten Ausführungsform ist vorgesehen, dass an der Verfahreinheit mehrere, insbesondere unabhängig voneinander positionierbare, Greifereinheiten befestigt sind. Dadurch können, beispielsweise in einer Produktionslinie, mehrere Teiglingen jeweils zeitgleich mit den verschiedenen Greifereinheiten positioniert und/oder gebogen werden, so dass sich der Mengendurchsatz der Anlage entsprechend erhöht.

Die Ausführung des Prozesses zur Formgebung des Teiglings mit entsprechender Vorrichtung wird insbesondere verbessert, wenn die Vorrichtung einen Lagescanner mit einer Auswerteeinheit umfasst. Hierbei kann die Position eines Teigrohlings mittels des Lagescanners auf dem Transportband festgestellt werden. Die Art des Lagescanners ist hierbei beliebig, sofern sichergestellt wird, dass von oben auf das Transportband betrachtet die räumliche Position erkannt wird. Dies kann zum einen ein bildgebendes Verfahren, z.B. eine Kamera, sein als auch Ultraschallsensoren oder dergleichen. Zumindest ist es relevant, dass die jeweilige Lage des Teiglings und somit die Abweichung von einer Referenzposition erkannt wird. Somit kann die Greifereinheit mittels der Verfahreinheit in die richtige Position relativ zum Teigling verfahren werden. Insofern ist es ermöglicht, den Teigling beliebig auf dem Transportband abzulegen, wobei die Vorrichtung selbstständig die Lage des Teiglings erkennt und die Greifereinheit in entsprechender Position oberhalb des Teiglings positionieren kann.

Weiterhin wird es durch die erfindungsgemäße Ausführung mit vorteilhafter Anwendung einer Verfahreinheit und Lagescanner ermöglicht, den Teigling im Folgenden von der Greifereinheit in eine Sollposition zu verbringen. Dieser Transport von der ursprünglichen Lage des Teiglings in seine Sollposition kann während des Transports auf dem Transportband erfolgen und hierbei während der Formgebung durchgeführt werden, als auch zuvor, nachfolgend oder den Formgebungsprozess unterbrechend.

Die neue Lösung eröffnet somit ein erfindungsgemäßes Verfahren zur Herstellung von U-förmigen oder ringförmigen Teiglingen aus im Wesentlichen geradlinigen, insbesondere gewickelten, Croissant-Teigrohlingen unter Verwendung einer Greifereinheit mit zumindest einer Haltebacke und zwei beweglichen beabstandeten Formbacken, insbesondere einer Vorrichtung entsprechend vorhergehender Ausführungsarten, umfassend die Schritte:
Zunächst erfolgt ein Transport von geradlinigen Teigrohlingen zu einer Formstation. Wie dieser Transport erfolgt, ist hierbei zunächst nebensächlich.

Erfindungsgemäß erfolgt ein Absenken der Haltebacke bis nahe einer Teigling-Unterlage bzw. dem Transportband. Diese Bewegung muss nicht zwingend exakt senkrecht verlaufen, sondern kann vielmehr ebenso eine kombinierte Bewegung senkrecht zur Unterlage und einer Annäherungsbewegung an den Teigling sein. Es ist zum einen möglich, die Haltebacke relativ zu einem Greiferträger oder bevorzugt die Greifereinheit mit der Haltebacke abzusenken. Durch Schließen der Greifeinheit kann dann die notwendige Kraft zum Positionieren bzw. Formen des Teiglings formschlüssig übertragen werden.

Des Weiteren werden erfindungsgemäß die beiden Formbacken bis zur Anlage an den Teigling auf der gegenüberliegenden Seite bewegt. Durch diese Bewegung der Formbacken an den Teigling erfolgt ein Einspannen des Teiglings zwischen Formbacke und Haltebacke.

Abschließend werden erfindungsgemäß die Formbacken unter Formung eines gebogenen bzw. ringförmigen Teiglings geschwenkt. Durch das Schwenken der Formbacken unter Mitnahme der Enden des Teiglings wird entsprechendes gewünschtes Ergebnis erzielt.

Besonders vorteilhaft ist hierbei, wenn die erste Formbacke eine zur Formgebung des Teiglings ebene, bogen-, ellipsen- oder kreisförmige Schwenkbewegung durchführt. Hingegen vollzieht die zweite Formbacke hierbei eine zusammengesetzte Bewegung aus einer zur ersten Formbacke über die Mittelebene symmetrische Schwenkbewegung und einer Hubbewegung in Richtung der Schwenkachse. Hierbei wird mittels der Hubbewegung der zweiten Formbacke das zweite Ende des Teigrohlings zum Abschluss der Schwenkbewegung der Formbacken oberhalb des ersten Endes des Teigrohlings zum Liegen gebracht.

Die Anwendung der kombinierten Bewegungen der beiden Formbacken führt zur besonders vorteilhaften Formgebung der entsprechenden Teiglinge. Hierdurch wird in besonders einfacher Weise eine entsprechende ringförmige Gestalt ermöglicht.

Besonders vorteilhaft ist der Einsatz eines Pressstempels, welcher die übereinanderliegenden Enden des Teigrohlings miteinander verpresst. Hierbei wird insbesondere beim und kurz nach dem Kontakt des Pressstempels mit dem Teigling die Rückbewegung der Formbacken ausgelöst.

Insbesondere ist durch diese Ausführung sichergestellt, dass der Teigling nach Ende der Formgebung seine ringförmige Gestalt bewahrt und nicht nachfolgend bzw. im nachfolgenden Backprozess wieder aufklappt.

Des Weiteren ist es vorteilhaft, wenn vor dem Absenken der Haltebacke die Lage des jeweiligen ankommenden Teiglings hinsichtlich der Lage auf einem Transportband gescannt wird. Hierbei wird infolge die Greifereinheit oberhalb des jeweiligen Teiglings positioniert.

Hierbei ist es insbesondere vorteilhaft, wenn der Teigling mittels der Greifereinheit auf eine Sollposition verbracht werden kann. Dies kann hierbei zugleich mit der Schwenkbewegung der Formbacken erfolgen oder im Ablauf die Schwenkbewegung unterbrechend.

In besonderer Ausführungsform ist es des Weiteren möglich, dass der Lagescanner die mittige Spitze eines gewickelten Croissant-Teiglings anhand der Wicklung ermitteln kann. Hierbei wird vor der Anlage aller Backen, d.h. der Haltebacken und der Formbacken an den Teigling, die Greifereinheit relativ zum Transportband im Wesentlichen senkrecht zur Mittelachse des Teiglings bewegt. Durch diese Bewegung, insbesondere bei Anlage der Haltebacken an den Teigling, kann der Teigling aufgrund seiner gerollten Form in eine Rollbewegung versetzt werden. Hierbei ist es zur Verbesserung möglich, zugleich die Haltebacken in eine senkrechte korrespondierende Bewegung zu versetzen. Aufgrund dieses Verfahrensschritts wird es insbesondere sichergestellt, dass die Formgebung in eine U-förmige bzw. ringförmige Gestalt bei gewickelten Croissant-Teiglingen immer in gleicher Weise erfolgt und somit kein Aufbiegen bzw. Aufklappen der mittigen Spitze des ursprünglichen dreieckigen flächigen Teiges erfolgt.

In den folgenden Figuren sind Beispiele für den Formgebungsprozess sowie für erfindungsgemäße Vorrichtungen dargestellt.

Es zeigen:
- Fig. 1: einen Ablauf des Formgebungsprozesses ausgehend vom gewickelten Teigrohling zum ringförmigen Teigling;
- Fig. 2: ein erstes Ausführungsbeispiel für eine erfindungsgemäße Vorrichtung bzw. Greifereinheit;
- Fig. 3: ein alternatives Ausführungsbeispiel für eine erfindungsgemäβe Vorrichtung bzw. Greifereinheit;

- Fig. 4: in Folge die Formgebung vom gewickelten Teigling mit Position von Form- und Haltebacke;
- Fig. 5: eine alternative Ausführungsform einer Greifereinheit mit der Formgebung des Teiglings.

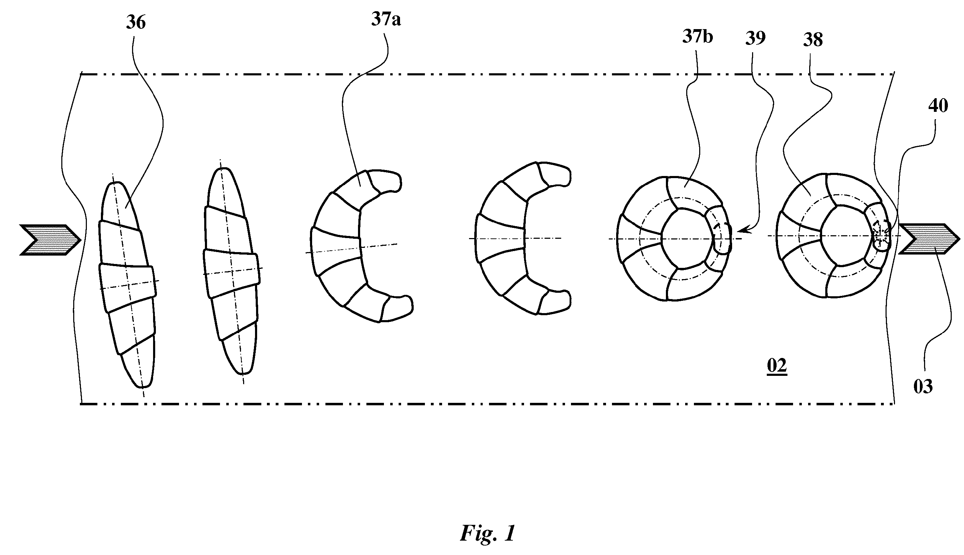

Die **Figur 1** zeigt beispielhaft die Formgebung eines Croissant-Teiglings ausgehend von einer geradlinigen gewickelten Form 36 in eine ringförmige Gestalt 38. Hierbei wird der gewickelte Teigling 36 auf ein Transportband 02 in eine Transportrichtung 03 bewegt. Dieser Teigling 36 kann in bevorzugter Ausführungsform der erfindungsgemäßen Vorrichtung bzw. des erfindungsgemäßen Verfahrens beliebig auf dem Transportband 02 abgelegt sein. Im Folgenden erfolgt die Formgebung über eine zunächst bogenförmige Gestalt des Teiglings 37a in eine ringförmige Gestalt 37b. Hierbei sind die Enden des ringförmigen Teiglings 37b überlappend 39 angeordnet. Nachfolgend wird der Teigling 38 fertig gestellt durch die Hinzufügung einer Verprägung 40 der überlappenden Teiglingenden 39.

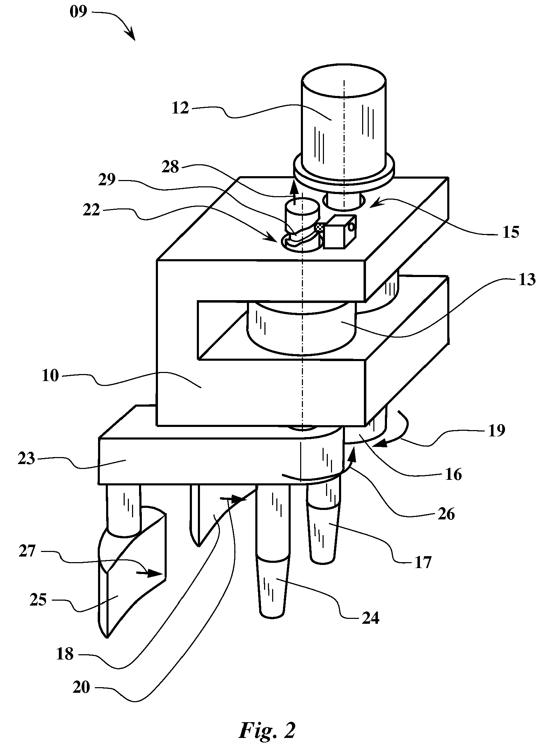

In **Figur 2** ist ein erstes Ausführungsbeispiel für eine erfindungsgemäße Vorrichtung skizziert. Die dargestellte Greifereinheit 09 kann in einfachster Art direkt die erfindungsgemäße Vorrichtung 01 bilden oder ist vorteilhafter Weise mit einer nicht dargestellten Verfahreinheit verbunden. Die Greifereinheit 09 besteht hierbei zunächst aus dem Greiferträger 10. Unterhalb des Greiferträgers 10 sind die beiden Schwenkträger 16 und 23 dargestellt. Diese sind mittels einer Welle im Greiferträger 10 schwenkbar gelagert. Die Kopplung dieser beiden Schwenkträger 16, 23 erfolgt über ein Schwenkgetriebe 13. Hierdurch wird sichergestellt, dass die beiden Schwenkträger 16, 23 eine entsprechende erfinderische gegenläufige Schwenkbewegung 19, 26 vollziehen. Der Antrieb erfolgt hierbei mit dem Schwenkantrieb 12, welcher beispielhaft oberhalb einer Welle eines Schwenkträgers 16 angeordnet und am Greiferträger 10 angebracht ist. Mit den Schwenkträgern 16, 23 fest verbunden sind jeweils Haltebacken 17, 24. Relativ beweglich zum Schwenkträger 16, 23 sind die erfindungsgemäßen Formbacken 18, 25 angebracht. Im skizzierten Beispiel vollziehen die Formbacken 18, 25 eine lineare Anlagebewegung 20, 27 in Richtung der Haltebacken 17, 24. Insofern wird durch die Anlagebewegung 20, 27 der zwischengelagerte Teigling eingespannt. Die Schwenkbewegung 19, 26 führt zu entsprechender Formgebung des Teiglings in entsprechende U-förmige oder ringförmige Gestalt. Zur Realisierung der Hubbewegung des zweiten Schwenkträgers wird in diesem Fall vorgestellt, dass eine Kulissenführung 29 mit einer Nut in der Welle des zweiten Schwenkträgers 23 mit Nutbolzen am Greiferträger 10 eingesetzt wird. Bei Vollziehen der Schwenkbewegung 26 führt die entsprechende Kulissenführung 29 zur Hubbewegung 28 des zweiten Schwenkträgers 23 und somit zur Hubbewegung der zweiten Haltebacke 24 und Formbacke 25.

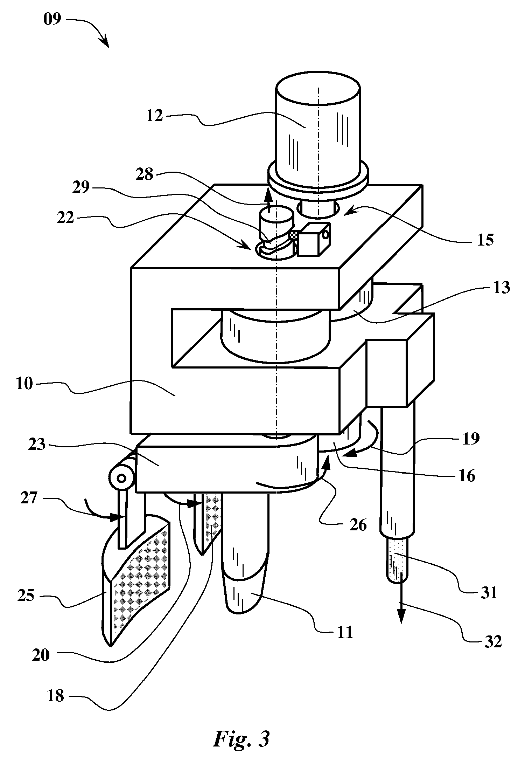

In **Figur 3** ist eine alternative Ausführungsform einer erfindungsgemäβen Greifereinheit 09 für eine Vorrichtung skizziert. Im Unterschied zur vorherigen Lösung weist diese Greifereinheit 09 eine fest mit der Greifereinheit 09 verbundene Haltebacke 11 auf. Diese ist zum Ende der Haltebacke 11 hin konisch ausgeführt. Dies stellt insbesondere sicher, dass bei einer senkrechten Annäherung bzw. Abhebebewegung der Greifereinheit 09 vom zu formenden bzw. geformten Teigling keine unerwünschte Schabbewegung bzw. Verformung des Teiglings stattfindet. Im Unterschied zur vorherigen Lösung sind des Weiteren die Formbacken 18, 25 drehbar an den Schwenkträgern 16, 23 gelagert. Entsprechend vollziehen die Formbacken 18, 25 eine Drehbewegung als Anlagebewegung 20, 27. Gleichfalls, wie in vorheriger Lösung, wird sichergestellt, dass die Formbacken 18 ,25 im Wesentlichen senkrecht zur Mittelachse auf den Teigling zu bewegt werden. Weiterhin dargestellt ist an dieser Ausführungsform der Einsatz eines Pressstempels 31. Dieser ist am Greiferträger 10 gelagert und kann eine entsprechende Hubbewegung 32 vollziehen. Die Lage des Pressstempels 31 befindet sich hierbei oberhalb der überlappenden Enden eines zu einem Ring geformten Teiglings.

Die nachfolgenden Figuren skizzieren besonders vorteilhafte Ausführungen des erfindungsgemäßen Verfahrens zur Formung eines Teiglings 36, 37, 38, 41. Der Prozess zur Formgebung verläuft fließend ohne explizite zwischenzeitliche Zustände anzunehmen. Insofern sind die dargestellten Schritte Momentaufnahmen im Prozessablauf.

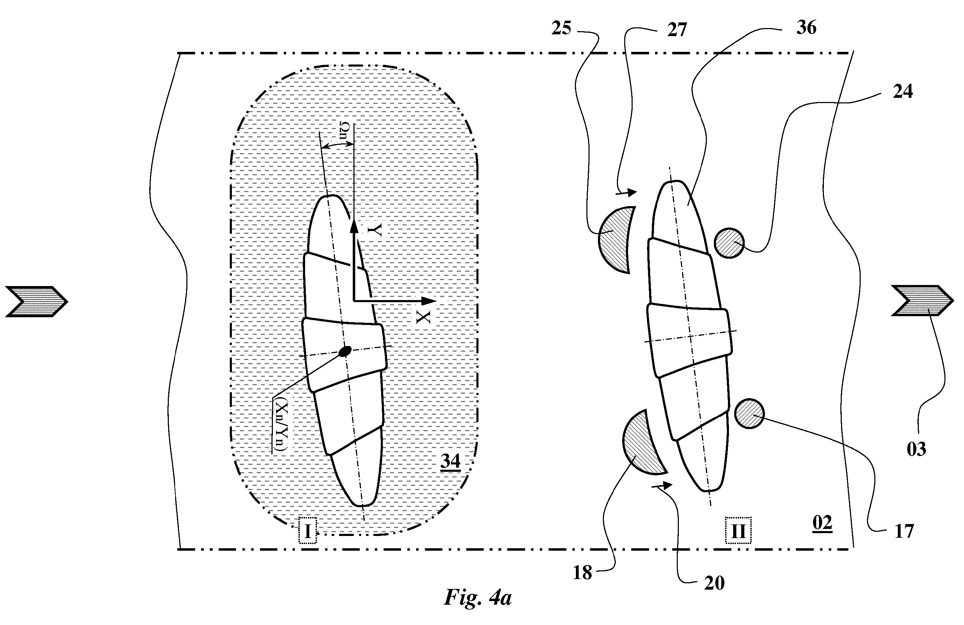

In **Figur 4a** im Prozessschritt I wird dargestellt, wie ein beliebig auf dem Transportband 02 abgelegter Teigling 36 mittels eines Lagescanners in einer Scannfläche 34 erfasst werden kann. Hierdurch kann die Abweichung von einer Referenzposition ermittelt werden.

Im nachfolgenden Prozessschritt II ist skizziert, wie die Haltebacken 17, 24 an den Teigling herangefahren wurden und im Folgenden mittels der Anlagebewegung 20, 27 die beiden Formbacken 18, 25 gegen den Teigling gefahren werden.

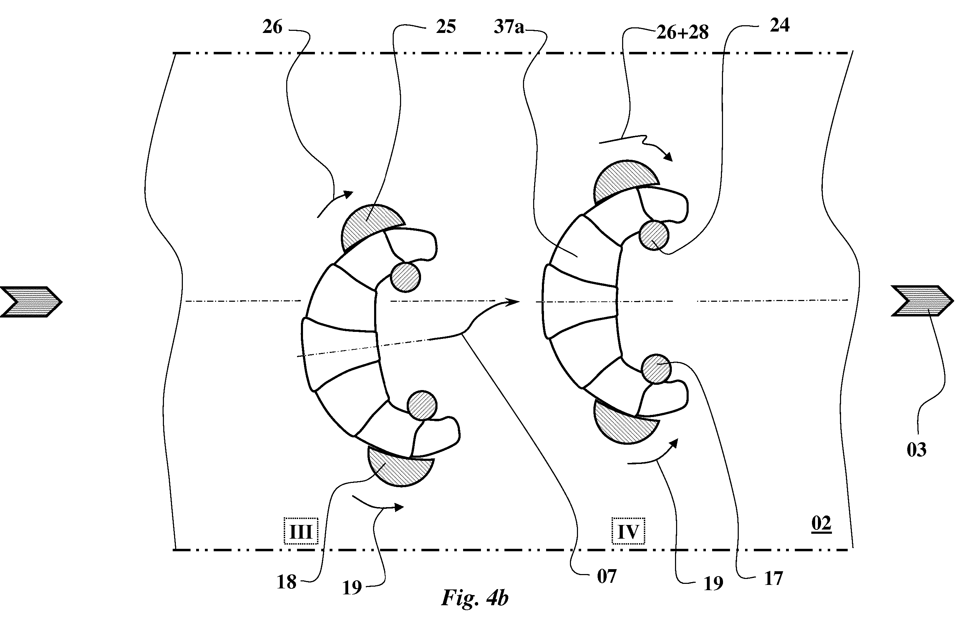

In **Figur 4b** im Prozessschritt III ist skizziert, wie der zwischen Haltebacke 17, 24 und Formbacke 18, 25 eingespannte Teigling 37a im Prozess mittels der Schwenkbewegung 19, 26 verformt wird. Zugleich ist es möglich, den Croissant-Teigling 37a mittels einer Verfahreinheit von der ursprünglichen Position in eine Sollposition mittels einer Justierbewegung 07 zu verbringen. Hierbei kann der Prozess des Formens des Teiglings 37a (Schritt IV) unvermindert fortgesetzt werden.

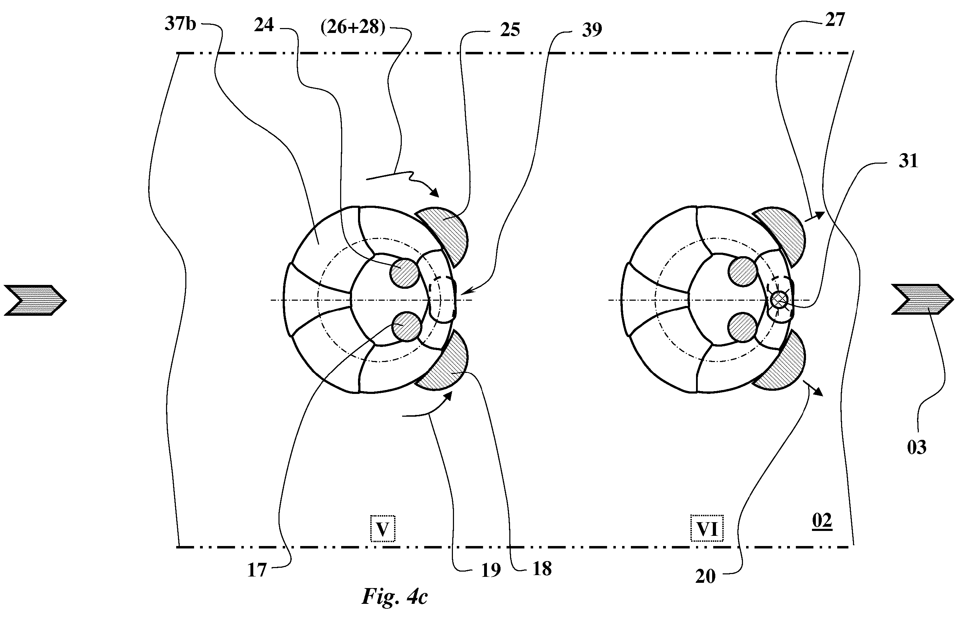

In **Figur 4c** im Prozessschritt V ist dargestellt, wie der Teigling 37b von Halte- 17, 24 und Formbacke 18, 25 zu einem Ring verformt wurde. Durch die kombinierte Bewegung der zweiten Halte- 24 und Formbacke 25 mittels der Schwenkbewegung 26 in Kombination mit der Hubbewegung 28 wird die Überlappung 39 des Teiglings 37b ermöglicht.

Abschließend erfolgt im Prozessschritt VI die Verpressung der überlappenden Teiglingenden 39 mittels des Pressstempels 31. In dieser Bewegung wird ab der Berührung mit dem Teigling die Anlagebewegung 20, 27 der Formbacken 18, 25 umgekehrt und somit die Einspannung des Teiglings 37b gelöst. Um das Ablösen des Teiges vom Pressstempel 31 zu unterstützen, kann durch eine Austrittsdüse in der Stirn des Pressstempels 31 Luft zeitweise ausgeblasen werden.

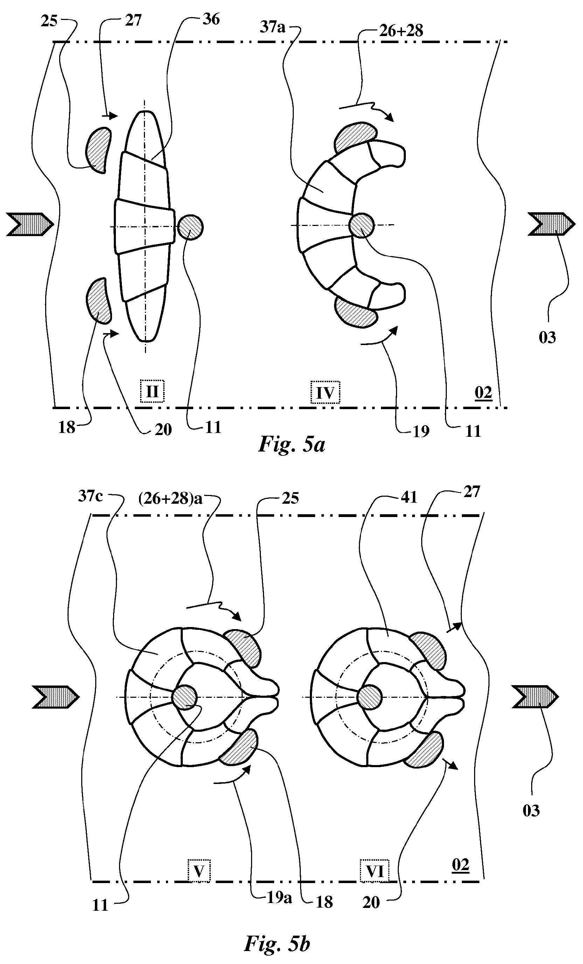

In alternativer Ausführung hierzu zeigt die **Figur 5** die Formgebung mittels einer Greifereinheit 09 bestehend aus einer Haltebacke 11 und zwei beabstandeten Formbacken 18, 25. Hierbei wird die Haltebacke 11 nicht mitgeschwenkt, sonder verbleibt vielmehr in gleicher Position relativ zum Teigling 36, 37, 41 und die Formbacken 18, 25 werden kreisend um die Haltebacke 11 herumgeführt.

In Fortführung ist es ohne weiteres möglich, sowohl eine feststehende Haltebacke einzusetzen sowie in Kombination je Schwenkträger eine bewegte Haltebacke vorzusehen.

## Patentansprüche

1. Vorrichtung zum Formen von im Wesentlichen geradlinigen, insbesondere gewickelten, Croissant-Teiglingen (36) in eine U-förmige oder ringförmige Gestalt mit einer Greifereinheit (09), wobei die Greifereinheit (09) aufweist:
- einen Greiferträger (10),
- und zumindest eine fest oder beweglich am Greiferträger (10) angebrachte Haltebacke (11, 17, 24), welche (11) an einer ersten Seite am Teigling (36, 37, 38, 41) zur Anlage gebracht werden kann,
- und zwei jeweils um eine Schwenkachse schwenkbar im Greiferträger (10) gelagerte Schwenkträger (16, 23), welche (16, 23) eine gegenläufige Schwenkbewegung (19, 26) durchführen,
- und jeweils eine am Schwenkträger (16, 23) angebrachte Formbacke (18, 25), welche (18, 25) auf der gegenüberliegenden zweiten Seite am Teigling (36, 37, 38, 41) zur Anlage gebracht werden kann,
**dadurch gekennzeichnet,**
**dass** an jedem Schwenkträger (16, 23) eine Haltebacke (17, 24) fest und die Formbacke (18, 25) beweglich angebracht sind.

2. Vorrichtung nach Anspruch 1,
**dadurch gekennzeichnet,**
**dass** die Greifereinheit (09) des Weiteren einen Schwenkantrieb (12) und ein Schwenkgetriebe (13) umfasst, wobei der erste Schwenkträger (16) vom Schwenkantrieb (12) bewegt werden kann und das Schwenkgetriebe (13) zu einer gegenläufigen Bewegung des zweiten Schwenkträgers (23) führt.

3. Vorrichtung nach Anspruch 1 oder 2,
**dadurch gekennzeichnet,**
**dass** die Greifereinheit (09) des Weiteren eine Hubvorrichtung umfasst, wobei mit der Hubvorrichtung ein Schwenkträger (23) und/oder eine Formbacke (25) relativ zum Greifer- (10) und/oder Schwenkträger (23) in Richtung der Schwenkachse angehoben werden kann.

4. Vorrichtung nach einem der Ansprüche 1 bis 3,
**dadurch gekennzeichnet,**
**dass** an der Greifereinheit (09) in einer Mittelebene der Greifereinheit (09) ein Pressstempel (31) angeordnet ist, der (31) mittels eines Stempelantriebes im Wesentlichen parallel zu den Schwenkachsen bewegt werden kann.

5. Vorrichtung nach einem der Ansprüche 1 bis 4,
**dadurch gekennzeichnet,**
**dass** die Vorrichtung eine Verfahreinheit umfasst, wobei mittels der Verfahreinheit die Greifereinheit (09) zumindest in einer Transportrichtung (03) eines Transportbandes (02) und quer zur Transportrichtung (03) und in einer zum Transportband (02) senkrechten Achse bewegt und um die senkrechte Achse geschwenkt werden kann.

6. Vorrichtung nach Anspruch 5,
**dadurch gekennzeichnet,**
**dass** die Greifereinheit (09) mit einer Werkzeugwechseleinrichtung auswechselbar an der Verfahreinheit befestigt werden kann.

7. Vorrichtung nach Anspruch 6,
**dadurch gekennzeichnet,**
**dass** an der Verfahreinheit mehrere, insbesondere unabhängig voneinander positionierbare, Greifereinheiten (09) befestigt werden können.

8. Vorrichtung nach einem der Ansprüche 1 bis 7,
**dadurch gekennzeichnet,**
**dass** die Vorrichtung einen Lagescanner mit einer Auswerteeinheit umfasst, wobei der Lagescanner zumindest die Position eines Teigrohlings (36) auf dem Transportband (02) feststellen kann.

9. Verfahren zur Herstellung von U-förmigen oder ringförmigen Teiglingen (38, 41) aus im Wesentlichen geradlinigen, insbesondere gewickelten, Croissant-Teigrohlingen (36), unter Verwendung einer Greifereinheit (09) mit zumindest zwei Haltebacken (11, 17, 24) und zwei beweglichen beabstandeten Formbacken (18, 25), insbesondere einer Vorrichtung nach einer der vorhergehenden Ansprüche, umfassend die Schritte:
- Transport von geradlinigen Teigrohlingen (36) zu einer Formstation;
- Absenken der Haltebacken (11, 17, 24) bis nahe einer Teigling-Unterlage bzw. dem Transportband (02), wobei die Absenkbewegung der Haltebacken (11, 17, 24) so gesteuert wird, dass der Teigling (36) zwischen den Haltebacken (11, 17, 24) und den Formbacken (18, 25) angeordnet ist;
- Bewegen (20, 27) der Formbacken (18, 25) bis zur Anlage der Formbacken (18, 25) an den Teigling (36) auf der gegenüberliegenden zweiten Seite;
- Schwenken der Formbacken (18, 25) und der Haltebacken (17, 24) unter Formung eines gebogenen oder ringförmigen Teiglings (37, 38, 41).

10. Verfahren nach Anspruch 9,
**dadurch gekennzeichnet,**
**dass** eine erste Formbacke (18) zur Formung des Teiglings (36, 37 38) eine ebene bogen-, ellipsen- oder kreisförmige Schwenkbewegung (19) durchführt, wobei die zweite Formbacke (25) zugleich eine zusammengesetzte Bewegung aus einer zur ersten Formbacke (18) über die Mittelebene symmetrischen Schwenkbewegung (26) und einer Hubbewegung (28) in Richtung der Schwenkachse durchführt, wobei mittels der Hubbewegung (28) das zweite Ende des Teigrohlings (36, 37, 38) zum Abschluss der Schwenkbewegung (19, 26) der Formbacken (18, 25) oberhalb des ersten Endes des Teigrohlings (36, 37, 38) zum Liegen kommt.

11. Verfahren nach Anspruch 9 oder 10,
**dadurch gekennzeichnet,**
**dass** ein Pressstempel (31) die übereinander liegenden Enden des Teigrohlings (37, 38) miteinander verpresst, wobei beim oder kurz nach dem Kontakt des Presstempels (31) mit dem Teigling (37, 38) die Rückbewegung (20, 27) der Formbacken (18, 25) einsetzt.

12. Verfahren nach einem der Ansprüche 9 bis 11,
**dadurch gekennzeichnet,**
**dass** vor dem Absenken der Haltebacken (11, 17, 24) die Lage des jeweilig ankommenden Teiglings (36) hinsichtlich der Lage auf einem Transportband (02) gescannt wird, und in Folge die Greifereinheit (09) oberhalb des jeweiligen Teiglings (36) positioniert wird.

13. Verfahren nach einem der Ansprüche 9 bis 12,
**dadurch gekennzeichnet,**
**dass** zugleich mit der Schwenkbewegung (19, 26) der Formbacken (18, 25) oder der Schwenkbewegung (19, 26) unterbrechend die Greifereinheit (09) derart mit dem eingespannten Teigling (37, 38, 41) verfahren wird, dass der Teigling (37, 38, 41) auf einer Sollposition verbracht wird.

## Claims

1. A device for forming substantially straight, in particular wound, croissant dough pieces (36) into a U-shape or annular shape, comprising a gripper unit (09), wherein the gripper unit (09) comprises:
- a gripper carrier (10);
- and at least one retaining jaw (11, 17, 24), which is rigidly or movably attached to the gripper carrier (10) and which can be brought into contact with the dough piece (36, 37, 38, 41) on a first side;
- and two pivot carriers (16, 23), which are each pivotably supported about a pivot axis in the gripper carrier (10) and which perform an opposite pivot motion (19, 26);
- and shaping jaws (18, 25), which are each attached to the pivot carrier (16, 23) and which can be brought into contact with the dough piece (36, 37, 38, 41) on the opposite second side, **characterized in that**
a retaining jaw (17, 24) is rigidly attached to each pivot carrier (16, 23) and the shaping jaw (18, 25) is movably attached to each pivot carrier (16, 23).

2. The device according to claim 1,
**characterized in that**
the gripper unit (09) further comprises a pivot drive (12) and a pivot gear (13), wherein the first pivot carrier (16) can be moved by the pivot drive (12) and the pivot gear (13) leads to an opposite movement of the second pivot carrier (23).

3. The device according to claim 1 or 2,
**characterized in that**
the gripper unit (09) further comprises a lifting device, wherein a pivot carrier (23) and/or a shaping jaw (25) can be lifted relative to the gripper (10) and/or pivot carrier (23) in the direction of the pivot axis by the lifting device.

4. The device according to any of the claims 1 to 3,
**characterized in that**
on the gripper unit (09) in a middle plane of the gripper unit (09), a press plunger (31) is disposed, which can be moved substantially parallel to the pivot axes by a plunger drive.

5. The device according to any of the claims 1 to 4,
**characterized in that**
the device comprises a displacement unit, wherein by means of the displacement unit the gripper unit (09) can be moved in at least one transport direction (03) of a conveyor belt (02) and transverse to the transport direction (03) and in an axis vertical to the conveyor belt (02) and can be pivoted around the vertical axis.

6. The device according to claim 5,
**characterized in that**
the gripper unit (09) can be exchangeably attached to the displacement unit by means of a tool changing device.

7. The device according to claim 6,
**characterized in that**
a number of gripper units (09) can be attached to the displacement unit, which are in particular positionable independently of each other.

8. The device according to any of the claims 1 to 7,
**characterized in that**
the device comprises a position scanner with an analyzing unit, wherein the position scanner can determine at least the position of a dough piece (36) on the conveyor belt (02).

9. A method for producing U-shaped or annular dough pieces (38, 41) from substantially straight, in particular wound, croissant dough pieces (36) using a gripper unit (09) comprising at least two retaining jaws (11, 17, 24) and two movable spaced shaping jaws (18, 25), in particular using a device according to any of the preceding claims, comprising the following steps:
- transport of straight dough pieces (36) to a forming station;
- lowering of the retaining jaws (11, 17, 24) closely toward a dough piece underlay or the conveyor belt (02), wherein the lowering motion of the retaining jaws (11, 17, 24) is controlled such that the dough piece (36) is disposed between the retaining jaws (11, 17, 24) and the shaping jaws (18, 25);
- moving (20, 27) of the shaping jaws (18, 25) until the shaping jaws (18, 25) come into contact with the dough piece (36) on the opposite second side;
- pivoting of the shaping jaws (18, 25) and/or the retaining jaws (17, 24), forming a curved or annular dough piece (37, 38, 41).

10. The method according to claim 9,
**characterized in that**
a first shaping jaw (18) for shaping the dough piece (36, 37, 38) performs a flat arc-, ellipse- or circle-like pivot motion (19), wherein the second shaping jaw (25) simultaneously performs a combined motion comprising a first pivot motion (26), which is symmetrical to the first shaping jaw (18) over the middle plane, and a lifting motion (28) in the direction of the pivot axis, wherein by way of the lifting motion (28) the second end of the dough piece (36, 37, 38) comes to a rest above the first end of the dough piece (36, 37, 38) at the termination of the pivot movement (19, 26) of the shaping jaws (18, 25).

11. The method according to claim 9 or 10,
**characterized in that**
a press plunger (31) presses together the ends of the dough piece (37, 38) lying on top of each other, wherein during or shortly after the contact of the press plunger (31) with the dough piece (37, 38) the return motion (20, 27) of the shaping jaws (18, 25) sets in.

12. The method according to any of the claims 9 to 11,
**characterized in that**
before the lowering of the retaining jaws (11, 17, 24) the position of each arriving dough piece (36) is scanned for its position on a conveyor belt (02) and as a result the gripper unit (09) is positioned above the respective dough piece (36).

13. The method according to any of the claims 9 to 12,
**characterized in that**
simultaneously with the pivot motion (19, 26) of the shaping jaws (18, 25) or interrupting the pivot motion (19, 26) the gripper unit (09) is displaced with the gripped dough piece (37, 38, 41) such that the dough piece (37, 38, 41) is taken to a target position.

## Revendications

1. Dispositif de formation de pâtons de croissant (36) essentiellement rectilignes, en particulier enroulés, en une forme de U ou annulaire, comportant une unité de préhension (09), l'unité de préhension (09) comprenant :
- un support de préhension (10),
- et au moins une mâchoire de retenue (11, 17, 24), qui est attachée de manière fixe ou mobile au support de préhension (10) et qui peut être mise en contact avec le pâton (36, 37, 38, 41) sur un premier côté,
- et deux supports pivotants (16, 23), qui sont respectivement montés de manière pivotante autour d'un axe de pivotement dans le support de préhension (10) et qui exécutent un mouvement pivotant (19, 26) en sens contraire,
- et respectivement une mâchoire de mise en forme (18, 25) qui est attachée au support pivotant (16, 23) et qui peut être mise en contact avec le pâton (36, 37, 38, 41) sur le deuxième côté opposé, **caractérisé en ce qu'**
une mâchoire de retenue (17, 24) est attachée de manière fixe à chaque support pivotant (16, 23) et la mâchoire de mise en forme (18, 25) est attachée de manière mobile à chaque support pivotant (16, 23).

2. Dispositif selon la revendication 1,
**caractérisé en ce que**
l'unité de préhension (09) comprend en outre un entraînement de pivotement (12) et un engrenage de pivotement (13), le premier support pivotant (16) pouvant être déplacé par l'entraînement de pivotement (12) et l'engrenage de pivotement (13) menant à un mouvement en sens contraire du deuxième support pivotant (23).

3. Dispositif selon les revendications 1 ou 2,
**caractérisé en ce que**
l'unité de préhension (09) comprend en outre un dispositif de levage, un support pivotant (23) et/ou une mâchoire de mise en forme (25) pouvant être soulevés relativement par rapport au support de préhension (10) et/ou au support pivotant (23) dans la direction de l'axe de pivotement par le dispositif de levage.

4. Dispositif selon l'une quelconque des revendications 1 à 3,
**caractérisé en ce qu'**
un piston de pression (31) est disposé sur l'unité de préhension (09) dans un plan central de l'unité de préhension (09) et peut être déplacé essentiellement en parallèle aux axes de pivotement par un entraînement de piston.

5. Dispositif selon l'une quelconque des revendications 1 à 4,
**caractérisé en ce que**
le dispositif comprend une unité de déplacement, l'unité de préhension (09) pouvant être déplacée au moyen de l'unité de déplacement au moins dans une direction de transport (03) d'une bande transporteuse (02) et transversalement à la direction de transport (03) et dans un axe vertical par rapport à la bande transporteuse (02) et pouvant être pivotée autour de l'axe vertical.

6. Dispositif selon la revendication 5,
**caractérisé en ce que**
l'unité de préhension (09) peut être attachée de manière échangeable à l'unité de déplacement par un dispositif de changement d'outil.

7. Dispositif selon la revendication 6,
**caractérisé en ce que**
plusieurs unités de préhension (09), en particulier positionnables indépendamment l'une de l'autre, peuvent être attachées à l'unité de déplacement.

8. Dispositif selon l'une quelconque des revendications 1 à 7,
**caractérisé en ce que**
le dispositif comprend un scanner de position comportant une unité d'évaluation, le scanner de position pouvant déterminer au moins la position d'un pâton (36) sur la bande transporteuse (02).

9. Procédé de production de pâtons (38, 41) en une forme de U ou annulaire à partir de pâtons de croissant (36) essentiellement rectilignes, en particulier enroulés, en utilisant une unité de préhension (09) comprenant au moins deux mâchoires de retenue (11, 17, 24) et deux mâchoires de mise en forme (18, 25) mobiles espacées, en particulier un dispositif selon l'une quelconque des revendications précédentes, comprenant les étapes suivantes :
- le transport de pâtons (36) rectilignes vers une station de mise en forme ;
- l'abaissement des mâchoires de retenue (11, 17, 24) jusqu'à proximité d'un support de pâton ou de la bande transporteuse (02), le mouvement d'abaissement des mâchoires de retenue (11, 17, 24) étant contrôlé de telle manière que le pâton (36) est disposé entre les mâchoires de retenue (11, 17, 24) et les mâchoires de mise en forme (18, 25) ;
- le déplacement (20, 27) des mâchoires de mise en forme (18, 25) jusqu'à ce que les mâchoires de mise en forme (18, 25) sont mises en contact avec le pâton (36) sur le deuxième côté opposé ;
- le pivotement des mâchoires de mise en forme (18, 25) et des mâchoires de retenue (17, 24), formant un pâton (37, 38, 41) courbé ou annulaire.

10. Procédé selon la revendication 9,
**caractérisé en ce qu'**
une première mâchoire de mise en forme (18) exécute un mouvement pivotant (19) en forme d'arc, d'ellipse ou de cercle afin de mettre en forme le pâton (36, 37, 38), la deuxième mâchoire de mise en forme (25) exécutant simultanément un mouvement combiné d'un mouvement pivotant (26) symétrique à la première mâchoire de mise en forme (18) à travers l'axe central et d'un mouvement de levage (28) dans la direction de l'axe de pivotement, la deuxième extrémité du pâton (36, 37, 38) se positionnant au dessus de la première extrémité du pâton (36, 37, 38) à la fin du mouvement pivotant (19, 26) des mâchoires de mise en forme (18, 25) au moyen du mouvement de levage (28).

11. Procédé selon les revendications 9 ou 10,
**caractérisé en ce qu'**
un piston de pression (31) presse ensemble les extrémités superposées du pâton (37, 38), le mouvement de retour (20, 27) des mâchoires de mise en forme (18, 25) commençant durant ou peu après le contact du piston de pression (31) avec le pâton (37, 38).

12. Procédé selon l'une quelconque des revendications 9 à 11,
**caractérisé en ce qu'**
avant l'abaissement des mâchoires de retenue (11, 17, 24), la position du pâton (36) arrivant respectif est scannée concernant sa position sur une bande transporteuse (02) et l'unité de préhension (09) est ensuite positionnée au-dessus du pâton (36) respectif.

13. Procédé selon l'une quelconque des revendications 9 à 12,
**caractérisé en ce que**
simultanément avec le mouvement pivotant (19, 26) des mâchoires de mise en forme (18, 25) ou interrompant le mouvement pivotant (19, 26), l'unité de préhension (09) est déplacée avec le pâton agrippé (37, 38, 41) de manière à ce que le pâton (37, 38, 41) est transféré dans une position prescrite.
